# EUROPÄISCHE PATENTSCHRIFT

(11) **EP 4 664 775 B1**
(45) Veröffentlichungstag und Bekanntmachung des Hinweises auf die Patenterteilung: **07.10.2026**
(21) Anmeldenummer: 25161812.0
(22) Anmeldetag: 05.03.2025
(51) Int. Cl.: H04B 5/26, H04B 5/72, H04B 5/73

(54) **SCHALTUNGSANORDNUNG FÜR EINEN FAHRZEUGGRIFF**
CIRCUIT ARRANGEMENT FOR A VEHICLE HANDLE
CIRCUIT POUR POIGNÉE DE VÉHICULE

(30) Priorität: 14.06.2024 DE 102024116735
(43) Veröffentlichungstag der Anmeldung: 17.12.2025
(73) Patentinhaber: HUF Hülsbeck & Fürst GmbH & Co. KG, 42551 Velbert (DE)
(72) Erfinder: ZIEGLER, Alexander, 42489 Wülfrath (DE); WICKERT, Pascal, 46049 Oberhausen (DE)
(74) Vertreter: Zenz Patentanwälte Partnerschaft mbB

(56) Entgegenhaltungen:
- EP-A1- 3 683 966
- DE-A1- 102020 127 437

## Beschreibung

Die vorliegende Erfindung betrifft eine Schaltungsanordnung für einen Fahrzeuggriff, welche ein Griffgehäuse und eine darin aufgenommene Platine umfasst. Auf der Platine befinden sich mehrere elektronische Komponenten, darunter eine NFC-Antenneneinheit, die mindestens eine Induktivität und einen ersten Kondensator zur Bildung einer Resonanzschaltung enthält. Des Weiteren ist eine Steuerkontakteinheit vorhanden, welche mit der NFC-Antenneneinheit gekoppelt ist und zur Ankoppelung von einer NFC-Steuerung ausgebildet ist.

Fahrzeuggriffe mit Kommunikationsmodulen zur drahtlosen Kommunikation mit Fahrzeugschlüsseln und Mobilgeräten nach verschiedenen Übertragungsstandards (beispielsweise Bluetooth, NFC, UWB) sind bereits etabliert und weit verbreitet. Bei den bekannten Fahrzeuggriffen ist auf der Platine, welche im Griffgehäuse angeordnet ist, eine Steuereinheit angeordnet, welche die Antennen, insbesondere NFC-Antennen, und weitere Komponenten des Fahrzeugtürgriffs ansteuert. Die weiteren Komponenten sind beispielsweise Sensoren oder Beleuchtungseinrichtungen. Diese zentrale Steuereinheit koordiniert gemäß dem Stand der Technik den Betrieb der verschiedenen Komponenten, also beispielsweise der Sensorik und der Sende-Empfangsgeräte und Antennen so, dass möglichst wenig gegenseitige Störung und Beeinflussung auftritt.

Aus der EP 3 640 896 A1 ist ein Fahrzeugtürgriff mit integrierter NFC-Elektronik bekannt. Der Griff enthält eine Spule, die im Kommunikationsmodus als Sende-Empfangsspule für NFC-Datenübertragung arbeitet. Zusätzlich kann die Spule im Sensormodus als induktiver Sensor genutzt werden. Bei Verformung des Griffs bewegt sich ein metallisches Bauteil relativ zur Spule, was eine Veränderung der Induktivität zur Folge hat. Diese Veränderung wird durch die Steuerschaltung überwacht, um ein Betätigungssignal zu erzeugen. Die Modi können abwechselnd oder nach erfolgreicher NFC-Kommunikation aktiviert werden.

EP 3 683 966 A1 beschreibt eine Betätigungsanordnung für ein Kraftfahrzeug mit einer induktiven Sensoranordnung zur Erfassung einer Ortsänderung eines metallischen Betätigungselements. Die Anordnung umfasst einen Mikrocontroller, dessen erster Ausgang einen Schwingkreis mit einer Anregungsspannung anregt. An einer ersten überwachten Spannung wird eine Schwellwertüberschreitung einer Startspannung erfasst, während an einer zweiten überwachten Spannung eine Schwellwertüberschreitung einer vorgegebenen Stoppspannung erfasst wird. Nach Erfassung beider Schwellwertüberschreitungen wird der seit dem Startzeitpunkt vergangene Zeitraum ermittelt.

EP 4 228 934 A1 offenbart eine Anordnung für eine Erfassung einer Aktivierungshandlung und für eine Kommunikation bei einem Fahrzeug, die zur Integration in das Fahrzeug ausgebildet ist. Das System weist eine Kommunikationsanordnung für eine wiederholte Ausgabe eines elektrischen Kommunikationssignals über eine Sendeverbindung zur Bereitstellung der Kommunikation auf sowie eine Sensoranordnung für die Erfassung der Aktivierungshandlung. Eine Kopplungsanordnung ist elektrisch mit der Sendeverbindung verbunden. Eine elektronische Verarbeitungsvorrichtung der Sensoranordnung ist mit der Kopplungsanordnung elektrisch verschaltet, um über die Kopplungsanordnung die Ausgabe des Kommunikationssignals zu detektieren.

In einigen Fahrzeuggriffen mit den genannten Funktionalitäten ist es jedoch vorgesehen, die Antenneneinheiten, insbesondere die NFC-Antenneneinheiten, durch andere Steuereinrichtungen für die Kommunikation zu betreiben, als für die übrigen Funktionen im Fahrzeugtürgriff verantwortlich sind. So sollen also beispielsweise die NFC-Kommunikationsfunktionen durch andere Steuereinrichtungen betrieben werden als die Sensorfunktionen. Bei getrennter Fertigung verschiedener Komponenten ist daher eine Abstimmung der Ansteuerung zwischen den verschiedenen Steuereinheiten erforderlich, um eine Beeinträchtigung der Funktionalität der Kommunikation und auch der Sensorik zu vermeiden.

Die Aufgabe der Erfindung besteht in der Bereitstellung einer Schaltungsanordnung für Fahrzeuggriffe, welche in verbesserter und störungsarmer Weise mit separaten Ansteuerungen für NFC-Antennen der Schaltungsanordnung zusammenwirkt.

Die zuvor beschriebene Aufgabe wird durch eine Schaltungsanordnung für einen Fahrzeuggriff mit den Merkmalen des Patentanspruchs 1 gelöst.

Weiterbildungen der Erfindung sind in den Unteransprüchen dargestellt.

Gemäß der Erfindung ist eine Detektionseinheit zur Erfassung eines Aktivitätssignals der NFC-Antenneneinheit auf der Platine angeordnet. Diese Detektionseinheit ist gegenüber der NFC-Antenneneinheit hochohmig gekoppelt und ausgebildet und umfasst eine erste Diodenanordnung, welche die Detektionseinheit mit der NFC-Antenneneinheit koppelt. Die Detektionseinheit ist zwischen der NFC-Antenneneinheit und der Steuerkontakteinheit mit den Signalleitungen der NFC-Antenneneinheit gekoppelt.

Zur Strombegrenzung ist eine Widerstandseinheit in Reihe zu der ersten Diodenanordnung geschaltet. Eine Glättungseinheit mit einer ersten Kapazität ist zwischen der Widerstandseinheit und Masse gekoppelt, um die Signale in der Detektionseinheit zu glätten. Dies dient zur Begrenzung des Stroms und Glättung der Signale, um Störungen und Rauschen zu minimieren. Ein Mikrocontroller, der ebenfalls auf der Platine angeordnet ist, empfängt über die Widerstandseinheit und die Diodenanordnung die geglätteten Signale. Anhand der Signale unterscheidet der Mikrocontroller Phasen der Aktivität und Inaktivität der NFC-Antenneneinheit.

Diese Schaltungsanordnung für einen Fahrzeuggriff ermöglicht es, die Aktivität der NFC-Antenne zu überwachen, ohne deren Betrieb negativ zu beeinflussen. Dies wird durch die hochohmige Ausbildung der Detektionseinheit erreicht, die Störungen des Antennenbetriebs vermeidet. Es ist so möglich, eine Schaltungsanordnung bereitzustellen, die eine Störungsfreie Ansteuerung der Sensoren und weiteren Komponenten erlaubt und außerdem eine extern ansteuerbare Antenne integriert. Die Ansteuerung der Antenne kann nämlich über die Steuerkontakteinheit durch eine separate Steuerschaltung erfolgen. Dies erlaubt eine flexible Nutzung der Schaltungsanordnung, da diese in ein Griffgehäuse integriert gebaut und ausgeliefert werden kann und bedarfsweise, beispielsweise modell- oder herstellerabhängig, eine NFC-Steuerung gekoppelt werden kann.

Vorzugsweise ist ein Überspannungsschutz mit wenigstens einer Diode, insbesondere einer Schottky-Diode, zwischen Mikrocontroller und Widerstandseinheit in der Detektionseinheit angeordnet, um die Spannung am Mikrocontroller auf einen vorgegebenen Wert zu begrenzen. Dies schützt den Mikrocontroller vor potenziellen Schäden durch Überspannung.

Vorzugsweise ist der Mikrocontroller über einen Interrupt-Pin mit der Widerstandseinheit gekoppelt ist. Die gewährleistet eine schnelle Reaktionszeit des Mikrocontrollers. Dieser kann über den Interrupt-Pin schnell auf externe Ereignisse reagieren, ohne dass der Mikrocontroller ständig den Zustand dieses Pins überwachen muss. Dies bedeutet, dass der Mikrocontroller andere Aufgaben ausführen kann und dennoch in der Lage ist, sofort auf wichtige Ereignisse zu reagieren, sobald sie eintreten. Durch die Verwendung eines Interrupt-Pins muss der Mikrocontroller keine kontinuierlichen Abfragen (Polling) durchführen, um den Zustand des Pins zu überprüfen.

Die NFC-Antenneneinheit ist vorzugsweise als gedruckte Spule auf der Platine ausgebildet, auf der auch der Mikrocontroller angeordnet ist. Die Integration der gedruckten Spule direkt auf der Platine verbessert die Kompaktheit des Designs. Dadurch wird der Platzbedarf reduziert, was insbesondere bei begrenztem Raumangebot in Fahrzeuggriffen vorteilhaft ist. Ein weiterer Vorteil ist die Reduktion der Herstellungskosten. Durch das Drucken der Spule auf die Platine entfallen separate Bauteile und zusätzliche Montageschritte, was die Produktionskosten senkt. Die Nähe der NFC-Antenneneinheit zum Mikrocontroller führt auch zu einer Verbesserung der Signalqualität und einer Reduzierung der Signallaufzeiten. Ein weiterer Vorteil besteht in der Robustheit und Langlebigkeit des Systems. Im Vergleich zu separaten, diskreten Spulen sind gedruckte Spulen weniger anfällig für mechanische Beschädigungen und Verschleiß. Dies erhöht die Zuverlässigkeit und Lebensdauer der NFC-Antenneneinheit, was besonders in anspruchsvollen Umgebungen, wie im Automobilbereich, von Vorteil ist.

Vorzugsweise ist der Mikrocontroller mit einer Sensoranordnung gekoppelt, die wenigstens einen Sensor aufweist. Der Mikrocontroller steuert oder wertet den Sensor in Abhängigkeit von der erfassten Aktivität der NFC-Antenneneinheit aus. Die Sensoranordnung kann einen Annäherungssensor oder einen Betätigungs- bzw. Kraftsensor aufweisen, um Bedienungshandlungen eines Benutzers zu erfassen. Je nach Sensoranordnung wird eine Annäherung an oder Krafteinwirkung auf das Gehäuse der Schaltungsanordnung erfasst.

Ein wesentlicher Vorteil dieser Ausbildung ist die kontextabhängige Steuerung der Sensoren. So ist es beispielsweise möglich, die Sensoren nur dann zu aktivieren, wenn die Aktivität der NFC-Antenneneinheit überwacht wird. Dadurch wird eine störungsfreie Auswertung der Sensorsignale gewährleistet, was zu einer verbesserten Energieeffizienz führt. Zudem werden dadurch Interferenzen und Störungen reduziert. Die Aktivierung der Sensoren erfolgt durch den Mikrocontroller nur dann, wenn die NFC-Antenne inaktiv ist. Dadurch werden mögliche Interferenzen zwischen den verschiedenen Komponenten minimiert. Dies führt zu einer zuverlässigeren und störungsfreieren Kommunikation und Sensordatenverarbeitung, was die Gesamtleistung und Zuverlässigkeit des Systems verbessert.

Ein Betrieb der Sensoren unter Beachtung der Aktivität der NFC-Antenne erhöht zudem die Benutzerfreundlichkeit und Funktionalität des Systems. Annäherungssensoren können dazu verwendet werden, die Annäherung eines Benutzers zu erkennen und entsprechende Funktionen zu aktivieren, beispielsweise das automatische Entsperren eines Fahrzeugs oder das Aktivieren von Beleuchtungselementen. Betätigungs- oder Kraftsensoren können verwendet werden, um direkte Bedienungshandlungen des Benutzers zu erfassen, beispielsweise das Öffnen oder Schließen einer Tür durch Berühren oder Drücken des Griffs. Die Kombination von NFC-Technologie und Sensoren bietet zudem zusätzliche Sicherheit und Funktionalität. So kann ein NFCfähiger Fahrzeugschlüssel in Kombination mit einem Annäherungssensor verwendet werden, um das Fahrzeug nur dann zu entriegeln, wenn der Schlüssel in der Nähe ist und eine bestimmte Annäherungshandlung erkannt wird. Dies erhöht die Sicherheit und schützt vor unbefugtem Zugriff. Diese Funktionalität wird durch die Schaltungsanordnung ermöglicht, auch wenn die NFC-Antenne durch eine separate Ansteuerung erfolgt.

Vorzugsweise ist der Mikrocontroller ausgebildet, die Auswertung des Sensors zu deaktivieren oder zu modifizieren, wenn eine Aktivität der NFC-Antenneneinheit erfasst wird.

In dieser Ausführungsform der Erfindung passt der Mikrocontroller die Betriebsweise des Sensors in Abhängigkeit von der erfassten NFC-Antennenaktivität an. Der Mikrocontroller kann beispielsweise die Auswertung des Sensors während der Aktivität der NFC-Antenneneinheit aussetzen. Alternativ kann er auch Auswertungskriterien, beispielsweise Schwellwerte oder Signaldauern, anpassen. Um Fehlauslösungen zu vermeiden, können beispielsweise höhere Schwellwerte oder auch längere Signalabschnitte ausgewertet werden, wenn eine NFC-Antennenaktivität erfasst wird. Da Störungen vermindert sind, wenn keine NFC-Antennenaktivität erfasst wird, können dann die Anforderungen an die Auswertung gegebenenfalls reduziert werden.

Der Sensor kann als induktiver oder kapazitiver Sensor ausgebildet sein.

Ein wesentlicher Vorteil induktiver Sensoren ist ihre Robustheit und Zuverlässigkeit. Induktive Sensoren sind unempfindlich gegenüber Staub, Schmutz, Feuchtigkeit und anderen Umwelteinflüssen, was sie für Anwendungen in Fahrzeugkomponenten empfiehlt. Kapazitive Sensoren hingegen sind in der Lage, eine Vielzahl von Materialien zu erkennen, darunter auch nichtmetallische Objekte wie Kunststoff, Glas, Flüssigkeiten und organische Substanzen. Dies macht sie sehr vielseitig und flexibel in ihrer Anwendung. Die Funktionsweise kapazitiver Sensoren basiert auf der Erfassung von Änderungen in der elektrischen Kapazität, wenn sich ein Objekt in der Nähe befindet. Dadurch sind sie in der Lage, selbst kleine und feine Berührungen oder Annäherungen zu detektieren.

Die Integration von induktiven oder kapazitiven Sensoren in eine Schaltungsanordnung bietet zudem den Vorteil einer einfachen Implementierung und Anpassung. Die Fertigung der Sensoren erfolgt in verschiedenen Formen und Größen, was eine flexible Anpassung an die spezifischen Anforderungen der Anwendung ermöglicht. Die Integration auf einer Platine sowie die Verbindung mit dem Mikrocontroller sind einfach zu bewerkstelligen.

Der Sensor sollte vorzugsweise innerhalb der Spulenwindung der Induktivität der NFC-Antenneneinheit auf der Platine angeordnet werden. Dies hat den Vorteil, dass der vorhandene Raum auf der Platine besser genutzt wird. Dies ist insbesondere in kompakten Fahrzeuggriffen von Bedeutung. Ein weiterer Vorteil ist die Reduktion der Verbindungs- und Leitungswege. Darüber hinaus kann die gemeinsame Anordnung von Sensor und NFC-Antenne die Komplexität der Platinenlayout- und Fertigungsprozesse reduzieren. Da beide Komponenten in einem gemeinsamen Bereich integriert sind, wird der Design- und Fertigungsaufwand verringert. Dies kann die Produktionskosten senken und die Herstellung der Schaltungsanordnung vereinfachen. Ein weiterer Vorteil ist die Verbesserung der Funktionalität und der Benutzererfahrung. Die räumliche Nähe des Sensors zur NFC-Antenne ermöglicht eine koordinierte und synergetische Nutzung beider Komponenten. Beispielsweise kann der Sensor präzise Benutzerinteraktionen erkennen und die NFC-Antenne entsprechend aktivieren oder deaktivieren, was zu einer verbesserten Reaktionsfähigkeit und Interaktivität des Systems führt. Dies kann insbesondere in Anwendungen vorteilhaft sein, bei denen eine nahtlose und intuitive Benutzerinteraktion erforderlich ist, wie beispielsweise beim berührungslosen Öffnen von Fahrzeugtüren.

In einer bevorzugten Weiterbildung der Erfindung ist eine NFC-Steuerschaltung ausgebildet, welche mit der Steuerkontakteinheit gekoppelt ist. Die NFC-Steuerschaltung ist dabei separat zu der Platine ausgebildet.

Wie bereits dargelegt, sieht die Schaltungsanordnung eine Ankopplung an die NFC-Antenne über eine Steuerkontakteinheit vor. Die Steuerkontakteinheit kann aus beliebigen elektrischen Kontaktmitteln, beispielsweise auch aus Lötpads, bestehen. Die Schaltungsanordnung wird also mitsamt der NFC-Antenne ausgebildet, wobei die Steuerung der NFC-Antenne von extern, gekoppelt durch die Steuerkontakteinheit, erfolgt. Dennoch kann die Sensorik in Abhängigkeit von der Aktivität der NFC-Antenne betrieben werden.

Die Schaltungsanordnung kann bei einem Verwender, beispielsweise bei einem Fahrzeughersteller, mit einer vom Fahrzeughersteller vorgesehenen NFC-Steuerschaltung gekoppelt werden. Dank der Detektionseinheit ist die Schaltungsanordnung nicht auf die Koordination der Ansteuerung der NFC-Antenne angewiesen, sondern reagiert auf die von außen angesteuerte NFC-Antenne.

Sollte ein Hersteller jedoch die Ausstattung der Schaltungsanordnung mitsamt einer NFC-Steuerschaltung wünschen, so ist es dank der Steuerkontakteinheit problemlos möglich, eine entsprechende NFC-Steuerschaltung anzukoppeln.

Grundsätzlich ist eine Verbindung der Steuerung der Schaltungsanordnung selbst, zum Beispiel auch des Mikrocontrollers auf der Platine, mit den Kontakten der Steuerkontakteinheit zur Ansteuerung der NFC-Antenne möglich. Es wird jedoch bevorzugt, eine separate NFC-Steuerschaltung zu verwenden, die modular im Fahrzeugtürgriff untergebracht oder beispielsweise in Halterungen auf der Platine als separates Bauteil montiert werden kann.

Vorzugsweise ist die Detektionseinheit mit ihren Komponenten so dimensioniert, dass bei Ansteuerung der NFC-Antenneneinheit mit einer Standard-Frequenz, insbesondere einer Frequenz um 13,56 MHz, ein durch die Glättungseinheit geglättetes Signal von wenigstens 1 V, vorzugsweise von wenigstens 2 V, innerhalb von höchstens 40 µs, vorzugsweise von 20 µs, am Mikrocontroller anliegt.

Dies ist insbesondere in Anwendungen von Bedeutung, in denen eine unmittelbare Erkennung und Verarbeitung von Signalen erforderlich ist, beispielsweise bei der Authentifizierung oder bei sicherheitskritischen Anwendungen im Fahrzeugbereich. Ein geglättetes Signal von wenigstens 1 V, vorzugsweise 2 V, gewährleistet, dass der Mikrocontroller ein eindeutiges und deutliches Signal erhält, das eine leichte Verarbeitung ermöglicht. Dies reduziert die Wahrscheinlichkeit von Fehlinterpretationen oder Signalrauschen, was die Zuverlässigkeit und Genauigkeit der Detektion erhöht. In der Praxis kann es erforderlich sein, die Komponentenwerte durch experimentelle Anpassungen weiter zu optimieren, um die besten Ergebnisse zu erzielen. Im angehängten Ausführungsbeispiel sind beispielhafte Werte angegeben, die in Abhängigkeit von den Anforderungen angepasst werden sollten.

Die Erfindung wird nun anhand der beiliegenden Zeichnung näher erläutert.
Figur 1 zeigt in schematischer Weise die Kopplung der Komponenten gemäß einem Ausführungsbeispiel der Erfindung;
Figur 2 zeigt einen Schaltplan der Komponenten aus Figur 1;
Figur 3a und Figur 3b zeigen Signalverläufe eines Antennensignals und eines Detektionssignals;

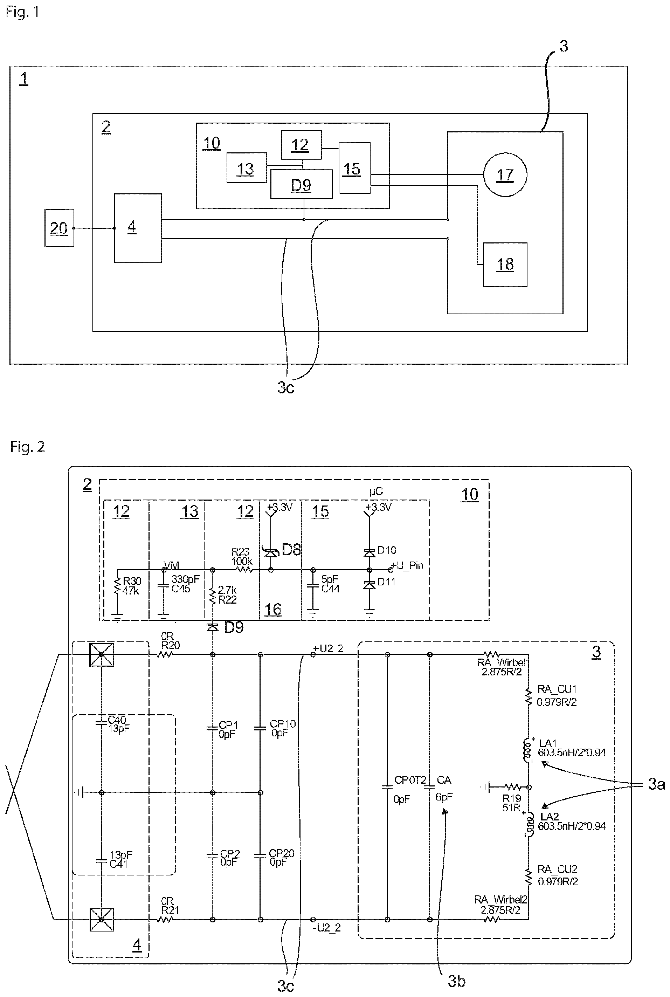

In Figur 1 ist die schematische Anordnung der Komponenten einer Schaltungsanordnung gemäß einem ersten Ausführungsbeispiel der Erfindung gezeigt.

Die Zeichnung in Fig. 1 zeigt eine Schaltungsanordnung für einen Fahrzeuggriff, der ein Griffgehäuse 1 mit einer darin aufgenommenen Platine 2 umfasst.

Die NFC-Antenneneinheit 3 auf der Platine 2 weist eine Resonanzschaltung auf, die aus mindestens einer Induktivität und einem ersten Kondensator besteht. Die Induktivitäten der NFC-Antenneneinheit 3 sind als gedruckte Spulen auf der Platine 3 ausgebildet, wodurch Platz gespart und die Komplexität der Schaltungsanordnung reduziert wird. Die Steuerkontakteinheit 4 ist mit der NFC-Antenneneinheit gekoppelt und überträgt Steuerungssignale an diese, um den Sende-Empfangsbetrieb der NFC-Antenne zu steuern.

Die Detektionseinheit 10 ist auf derselben Platine 2 angeordnet. Die Detektionseinheit erfasst Signale zur Bestimmung der Aktivität der NFC-Antenneneinheit 3 aus den Signalleitungen 3c zwischen Steuerkontakteinheit und NFC-Antenneneinheit 3 und ist hochohmig mit den Signalleitungen 3c der NFC-Antenneneinheit 3 gekoppelt. Die Detektionseinheit umfasst eine erste Diodenanordnung D9, über welche die Detektionseinheit mit der NFC-Antenneneinheit 3 gekoppelt ist. Die Detektionseinheit ist dabei zwischen der NFC-Antenneneinheit und der Steuerkontakteinheit mit den Signalleitungen der NFC-Antenneneinheit gekoppelt.

Zur Begrenzung des Stromflusses ist eine Widerstandseinheit 12 in Reihe zu der ersten Diodenanordnung D9 geschaltet. Eine Glättungseinheit 13 mit einer ersten Kapazität ist zwischen der Widerstandseinheit 12 und Masse gekoppelt, um die Signale zu glätten. Ein auf der Platine 2 angeordneter Mikrocontroller 15 ist mit der Widerstandseinheit 12 verbunden und empfängt über diese geglättete Signale, anhand derer der Mikrocontroller 15 die Aktivität der NFC-Antenneneinheit erfasst.

Der Mikrocontroller 15 ist mit einer Sensoranordnung gekoppelt, die wenigstens einen Sensor 17, 18 zur Erfassung von Benutzerhandlungen aufweist. Die Sensoren können als induktive oder kapazitive Sensoren ausgebildet sein und sind innerhalb der Spulenwindung der NFC-Antennenanordnung angeordnet. Dies ermöglicht eine platzsparende Konstruktion und verbessert die Effizienz der Schaltungsanordnung.

Die Erfassung der Aktivität der NFC-Antenneneinheit ermöglicht es dem Mikrocontroller, die Sensoren in Abhängigkeit von der erfassten Aktivität anzusteuern und/oder auszuwerten. Der Mikrocontroller kann die Auswertung des Sensors aussetzen oder modifizieren, wenn er eine Aktivität der NFC-Antenneneinheit erfasst, um Interferenzen zu vermeiden und die Energieeffizienz zu erhöhen.

Des Weiteren ist eine separate NFC-Steuerschaltung mit der Steuerkontakteinheit gekoppelt, die außerhalb der Platine angeordnet ist. Dies ermöglicht eine flexible Systemintegration, sofern die NFC-Steuerschaltung durch separate Baugruppen realisiert werden soll.

Ein Fahrzeughersteller kann beispielsweise das Griffgehäuse mit den darin integrierten Komponenten auf der Platine erhalten und in einfacher Weise eine von ihm selbst bereitgestellte NFC-Steuerschaltung mit der Steuerkontakteinheit koppeln.

Obgleich der Mikroprozessor in einem solchen Fall keine Steuerung der NFC-Antenneneinheit übernimmt oder auf das Timing-Schema einer solchen Ansteuerung zugreifen kann, erfasst der Mikrocontroller in der Detektionseinheit die Aktivität der NFC-Antenneneinheit. Dies erlaubt eine modulare Verwendung der Schaltungsanordnung mit dem umgebenden Griffgehäuse.

Fig. 2 präsentiert eine detaillierte Ansicht der Schaltungsanordnung, wie sie in Abbildung 1 dargestellt ist. Die NFC-Antenneneinheit 3, die eine Induktivität 3a und einen ersten Kondensator 3b aufweist, um eine Resonanzschaltung zu bilden, ist in der Schaltung integriert. Die Induktivität und auch der erste Kondensator sind hier beispielhaft mit spezifischen Werten ausgeführt.

Die Steuerkontakteinheit 4 ist mit der NFC-Antenneneinheit 3 über Signalleitungen 3c verbunden. Diese Einheit überträgt Steuerungssignale an die NFC-Antenneneinheit.

Des Weiteren ist auf der Platine 2 die Detektionseinheit 10 ausgebildet. Eine Diodenanordnung D9 koppelt die Detektionseinheit 10 mit der NFC-Antenneneinheit. Eine Widerstandseinheit dient zur Strombegrenzung. Die Glättungseinheit besteht aus einem Kondensator, der die durch die Dioden durchgelassenen Signale glättet. Die Widerstände und Kondensatoren sind so abgestimmt, dass sie die Anstiegszeit des Signals steuern, welches bei Aktivität der NFC-Antenneneinheit an dem Mikrocontroller anliegt.

Der Mikrocontroller 15 ist über die Widerstandseinheit 12 mit der Diodenanordnung D9 und der Glättungseinheit 13 gekoppelt. Er empfängt geglättete Signale und ist ausgebildet, um die Aktivität der NFC-Antenneneinheit zu erfassen.

Ein Überspannungsschutz ist zwischen dem Mikrocontroller und der Widerstandseinheit angeordnet und enthält eine Schottky-Diode, um die Spannung am Mikrocontroller auf einen sicheren Wert zu begrenzen. Der Mikrocontroller ist über einen Interrupt-Pin mit der Widerstandseinheit verbunden, was eine schnelle Reaktion auf Signaländerungen ermöglicht.

Die Detektionseinheit ist so dimensioniert, dass sie bei Ansteuerung der NFC-Antenneneinheit mit einer Standard-Frequenz von 13,56 MHz innerhalb von höchstens 20 µs ein durch die Glättungseinheit geglättetes Signal von mindestens 2 V erzeugt.

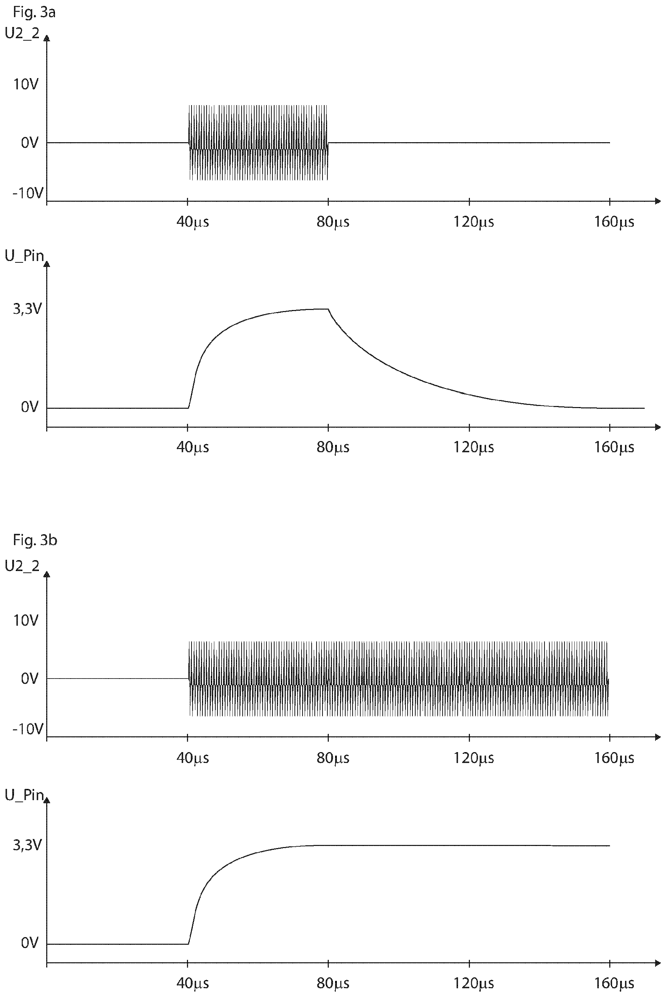

Figur 3a zeigt den zeitlichen Signalverlauf am Abgriff U2_2 und am Interrupt-Pin (U-Pin) des Mikrocontrollers. Das obere Diagramm zeigt einen 40 µs andauernden Burst in der Antennenansteuerung, welcher einem Abfragesignal (Polling) der NFC-Antenne entspricht. Eine solche Abfrage wird beispielsweise in Abständen von 100 ms oder einigen 10 ms durchgeführt. Die Detektionsschaltung 10 erfasst die Antennenaktivität über den Abgriff an den Signalleitungen 3C, wobei eine Gleichrichtung durch die Diode D9 und eine Glättung durch die Glättungseinheit 13 erfolgt. Über die Widerstandseinheit 12 liegt das im unteren Abschnitt der Figur 3a gezeigte Signal an dem Interrupt-Pin des Mikrocontrollers 15 an. Es ist ersichtlich, dass das Signal auf 3,3 V begrenzt wird, wobei ein Wert von über 2 V jedoch nach etwa 10 µs, höchstens 20 µs erreicht wird. Der Mikrocontroller 15 erfasst die Aktivität der NFC-Antenneneinheit 3 über seinen Interrupt-Pin und passt die Ansteuerung oder Auswertung der Sensoren 17 und 18 entsprechend an. Infolgedessen kann er die Auswertung in Zeiten der Aktivität der NFC-Antenne vollständig unterlassen oder Auswertungswerte oder Ansteuerungen modifizieren. Zudem ist es dem Mikrocontroller 15 möglich, die Sensoren 17 und 18 auch vollständig oder teilweise abzuschalten, um den Antennenbetrieb nicht zu stören.

In der Figur 3b ist exemplarisch dargestellt, was bei anhaltender Aktivität der NFC-Antenneneinheit 3 geschieht. Das Signal am Interrupt-Pin des Mikrocontrollers 15 bleibt auf hohem Niveau, was bedeutet, dass der Mikrocontroller 15 den fortgesetzten Betrieb der NFC-Antenneneinheit 3 feststellt. In der Folge kann der Mikrocontroller 15 die Ansteuerung der Sensoren 17 und 18 entsprechend unterlassen oder anpassen oder die Sensoren ausschalten.

## Patentansprüche

1. Schaltungsanordnung für einen Fahrzeuggriff, mit einem Griffgehäuse (1) mit einer darin aufgenommenen Platine (2),
wobei auf der Platine (2) angeordnet ist:
eine NFC-Antenneneinheit (3), die mindestens eine Induktivität (3a) und einen ersten Kondensator (3b) aufweist, um ein Resonanzschaltung zu bilden,
eine Steuerkontakteinheit (4), die mit der NFC-Antenneneinheit (3) gekoppelt ist und dazu eingerichtet ist, Steuerungssignale an die NFC-Antenneneinheit (3) zu übertragen,
eine auf der Platine (2) angeordnete Detektionseinheit (10) zur Erfassung eines Aktivitätssignals der NFC-Antenneneinheit (3), wobei die Detektionseinheit (10) mit der NFC-Antenneneinheit (3) hochohmig gekoppelt ist und aufweist:
eine auf der Platine (2) angeordnete erste Diodenanordnung (D9), welche die Detektionseinheit (10) mit der NFC-Antenneneinheit (3) koppelt, wobei die Detektionseinheit (10) zwischen NFC-Antenneneinheit (3) und Steuerkontakteinheit (4) mit Signalleitungen (3c) der NFC-Antennneneinheit gekoppelt ist,
eine auf der Platine (2) angeordnete Widerstandseinheit (12), die zur Strombegrenzung in Reihe zu der ersten Diodenanordnung (11) geschaltet ist,
eine auf der Platine (2) angeordnete Glättungseinheit (13) mit einer ersten Kapazität (13a), welche zwischen der Widerstandseinheit (12) und Masse gekoppelt ist,
einen auf der Platine (2) angeordnete Mikrocontroller (15), der mit der Widerstandseinheit (12) gekoppelt ist, um über die Widerstandseinheit (12) und die Diodenanordnung (11) ein Signal, das eine Aktivität der NFC-Antenneneinheit (3) anzeigt, zu empfangen.

2. Schaltungsanordnung nach Anspruch 1, wobei zwischen Mikrocontroller (15) und Widerstandseinheit (12) auf der Platine ein Überspannungsschutz (16) mit wenigstens einer Diode (D8) angeordnet ist, insbesondere einer Schottky-Diode gekoppelt ist, welcher zur Begrenzung der Spannung am Mikrocontroller (15) auf einen vorgegebenen Wert ausgebildet ist.

3. Schaltungsanordnung nach einem der vorangehenden Ansprüche, wobei der Mikrocontroller (15) über einen Interrupt-Pin mit der Widerstandseinheit (12) gekoppelt ist.

4. Schaltungsanordnung nach einem der vorangehenden Ansprüche, wobei die NFC-Antenneneinheit (3) als gedruckte Spule auf der Platine (3) ausgebildet ist, auf welcher auch der Mikrocontroller (15) angeordnet ist.

5. Schaltungsanordnung nach einem der vorangehenden Ansprüche, wobei der Mikrocontroller (15) mit einer Sensoranordnung gekoppelt ist, welche wenigstens einen Sensor (17, 18) zur Erfassung einer Betätigung durch einen Benutzer aufweist, wobei der Mikrocontroller (15) den Sensor in Abhängigkeit von der erfassten Aktivität der NFC-Antenneneinheit (3) ansteuert oder auswertet.

6. Schaltungsanordnung nach Anspruch 5, wobei der Mikrocontroller (15) ausgebildet ist, eine Auswertung des Sensors (17, 18) auszusetzen oder zu modifizieren, wenn er eine Aktivität der NFC-Antenneneinheit (3) erfasst.

7. Schaltungsanordnung nach Anspruch 5 oder 6, wobei der Sensor (17) als induktiver Sensor oder als kapazitiver Sensor (18) ausgebildet ist.

8. Schaltungsanordnung nach einem der Ansprüche 5 bis 7, wobei der Sensor (17, 18) innerhalb der Spulenwindung der Induktivität der NFC-Antenneneinheit (3) auf der Platine (2) angeordnet ist.

9. Schaltungsanordnung nach einem der vorangehenden Ansprüche, wobei eine NFC-Steuerschaltung (20) ausgebildet ist, welche mit der Steuerkontakteinheit (4) gekoppelt ist, wobei die NFC-Steuerschaltung (20) separat zu der Platine (2) ausgebildet ist.

10. Schaltungsanordnung nach einem der vorangehenden Ansprüche, wobei die Detektionseinheit (10) mit ihren Komponenten dimensioniert ist, bei Ansteuerung der NFC-Antenneneinheit (3) mit einer Standard-Frequenz, insbesondere einer Frequenz um 13,56 MHz, ein durch die Glättungseinheit (13) geglättetes Signal von wenigstens 1 V, vorzugsweise von wenigstens 2 V, innerhalb von höchstens 40 µs, vorzugsweise von 20 µs, anzulegen.

11. Schaltungsanordnung nach einem der vorangehenden Ansprüche, wobei die Widerstandseinheit (12) einen Widerstandswert von mindestens 10 kOhm, vorzugsweise 30kOhm aufweist.

## Claims

1. A circuit arrangement for a vehicle handle, comprising a handle housing (1) having a circuit board (2) accommodated therein, wherein the following are arranged on the circuit board (2):
an NFC antenna unit (3) which has at least one inductor (3a) and a first capacitor (3b) in order to form a resonant circuit,
a control contact unit (4) which is coupled to the NFC antenna unit (3) and is configured to transmit control signals to the NFC antenna unit (3),
a detection unit (10) arranged on the circuit board (2) for detecting an activity signal of the NFC antenna unit (3), wherein the detection unit (10) is coupled to the NFC antenna unit (3) with high impedance and comprises:
a first diode arrangement (D9) arranged on the circuit board (2), which couples the detection unit (10) to the NFC antenna unit (3), wherein the detection unit (10) is coupled, between the NFC antenna unit (3) and the control contact unit (4), to signal lines (3c) of the NFC antenna unit,
a resistor unit (12) arranged on the circuit board (2), which is connected in series with the first diode arrangement (11) for current limiting,
a smoothing unit (13) arranged on the circuit board (2) having a first capacitance (13a), which is coupled between the resistor unit (12) and ground,
a microcontroller (15) arranged on the circuit board (2), which is coupled to the resistor unit (12) in order to receive, via the resistor unit (12) and the diode arrangement (11), a signal indicating an activity of the NFC antenna unit (3).

2. The circuit arrangement according to claim 1, wherein an overvoltage protection (16) comprising at least one diode (D8), in particular a Schottky diode, is arranged and coupled between the microcontroller (15) and the resistor unit (12) on the circuit board, the overvoltage protection (16) being configured to limit the voltage at the microcontroller (15) to a predetermined value.

3. The circuit arrangement according to any one of the preceding claims, wherein the microcontroller (15) is coupled to the resistor unit (12) via an interrupt pin.

4. The circuit arrangement according to any one of the preceding claims, wherein the NFC antenna unit (3) is configured as a printed coil on the circuit board (3), on which the microcontroller (15) is also arranged.

5. The circuit arrangement according to any one of the preceding claims, wherein the microcontroller (15) is coupled to a sensor arrangement which comprises at least one sensor (17, 18) for detecting an actuation by a user, wherein the microcontroller (15) drives or evaluates the sensor depending on the detected activity of the NFC antenna unit (3).

6. The circuit arrangement according to claim 5, wherein the microcontroller (15) is configured to suspend or modify an evaluation of the sensor (17, 18) when it detects an activity of the NFC antenna unit (3).

7. The circuit arrangement according to claim 5 or 6, wherein the sensor (17) is configured as an inductive sensor or as a capacitive sensor (18).

8. The circuit arrangement according to any one of claims 5 to 7, wherein the sensor (17, 18) is arranged within the winding of the inductor of the NFC antenna unit (3) on the circuit board (2).

9. The circuit arrangement according to any one of the preceding claims, wherein an NFC control circuit (20) is provided, which is coupled to the control contact unit (4), wherein the NFC control circuit (20) is implemented separately from the circuit board (2).

10. The circuit arrangement according to any one of the preceding claims, wherein the detection unit (10), together with its components, is dimensioned to apply, when driving the NFC antenna unit (3) at a standard frequency, in particular a frequency of about 13.56 MHz, a signal smoothed by the smoothing unit (13) of at least 1 V, preferably of at least 2 V, within no more than 40 µs, preferably within 20 µs.

11. The circuit arrangement according to any one of the preceding claims, wherein the resistor unit (12) has a resistance value of at least 10 kOhm, preferably 30kOhm.

## Revendications

1. Arrangement de circuit pour une poignée de véhicule, comprenant un boîtier de poignée (1) dans lequel est logée une carte de circuit imprimé (2), sur laquelle sont disposés :
une unité d'antenne NFC (3) comportant au moins un inducteur (3a) et un premier condensateur (3b) pour former un circuit résonant,
une unité de contact de commande (4) couplée à l'unité d'antenne NFC (3) et conçue pour transmettre des signaux de commande à l'unité d'antenne NFC (3),
une unité de détection (10) disposée sur la carte de circuit imprimé (2) pour détecter un signal d'activité de l'unité d'antenne NFC (3), l'unité de détection (10) étant couplée à l'unité d'antenne NFC (3) à haute impédance et comportant :
un premier arrangement de diodes (D9) disposé sur la carte de circuit imprimé (2), qui couple l'unité de détection (10) à l'unité d'antenne NFC (3), l'unité de détection (10) étant couplée, entre l'unité d'antenne NFC (3) et l'unité de contact de commande (4), à des lignes de signal (3c) de l'unité d'antenne NFC,
une unité résistive (12) disposée sur la carte de circuit imprimé (2), montée en série avec le premier arrangement de diodes (11) pour limiter le courant,
une unité de lissage (13) disposée sur la carte de circuit imprimé (2), comportant une première capacité (13a), laquelle est couplée entre l'unité résistive (12) et la masse,
un microcontrôleur (15) disposé sur la carte de circuit imprimé (2), couplé à l'unité résistive (12) afin de recevoir, par l'intermédiaire de l'unité résistive (12) et de l'arrangement de diodes (11), un signal indiquant une activité de l'unité d'antenne NFC (3).

2. Arrangement de circuit selon la revendication 1, dans lequel une protection contre les surtensions (16) comportant au moins une diode (D8), en particulier une diode Schottky, est disposée et couplée entre le microcontrôleur (15) et l'unité résistive (12) sur la carte de circuit imprimé, la protection contre les surtensions (16) étant conçue pour limiter la tension au niveau du microcontrôleur (15) à une valeur prédéterminée.

3. Arrangement de circuit selon l'une des revendications précédentes, dans lequel le microcontrôleur (15) est couplé à l'unité résistive (12) par l'intermédiaire d'une broche d'interruption.

4. Arrangement de circuit selon l'une des revendications précédentes, dans lequel l'unité d'antenne NFC (3) est réalisée sous la forme d'une bobine imprimée sur la carte de circuit imprimé (3), sur laquelle le microcontrôleur (15) est également disposé.

5. Arrangement de circuit selon l'une des revendications précédentes, dans lequel le microcontrôleur (15) est couplé à un arrangement de capteurs comportant au moins un capteur (17, 18) destiné à détecter un actionnement par un utilisateur, le microcontrôleur (15) pilotant ou évaluant le capteur en fonction de l'activité détectée de l'unité d'antenne NFC (3).

6. Arrangement de circuit selon la revendication 5, dans lequel le microcontrôleur (15) est conçu pour suspendre ou modifier une évaluation du capteur (17, 18) lorsqu'il détecte une activité de l'unité d'antenne NFC (3).

7. Arrangement de circuit selon la revendication 5 ou 6, dans lequel le capteur (17) est réalisé sous la forme d'un capteur inductif ou d'un capteur capacitif (18).

8. Arrangement de circuit selon l'une des revendications 5 à 7, dans lequel le capteur (17, 18) est disposé à l'intérieur de l'enroulement de l'inducteur de l'unité d'antenne NFC (3) sur la carte de circuit imprimé (2).

9. Arrangement de circuit selon l'une des revendications précédentes, dans lequel un circuit de commande NFC (20) est prévu, lequel est couplé à l'unité de contact de commande (4), le circuit de commande NFC (20) étant réalisé séparément de la carte de circuit imprimé (2).

10. Arrangement de circuit selon l'une des revendications précédentes, dans lequel l'unité de détection (10), avec ses composants, est dimensionnée pour appliquer, lors du pilotage de l'unité d'antenne NFC (3) à une fréquence standard, en particulier une fréquence d'environ 13,56 MHz, un signal lissé par l'unité de lissage (13) d'au moins 1 V, de préférence d'au moins 2 V, dans un délai d'au plus 40 µs, de préférence de 20 µs.

11. Arrangement de circuit selon l'une des revendications précédentes, dans lequel l'unité résistive (12) présente une valeur de résistance d'au moins 10 kOhm, de préférence 30kOhm.
